# EUROPÄISCHE PATENTSCHRIFT

(11) **EP 1 525 714 B1**
(45) Veröffentlichungstag und Bekanntmachung des Hinweises auf die Patenterteilung: **14.04.2010**
(21) Anmeldenummer: 03740081.9
(22) Anmeldetag: 11.06.2003
(51) Int. Cl.: H04L 12/28

(54) **KONFIGURATION EINES AUF EINEM BREITBAND KABELVERTEILNETZ BERUHENDEN TELEFONIEZUGANGSNETZES UND EINER ZUGEHÖRIGEN PAKETBASIERTEN VERMITTLIUNGSSTELLE**
CONFIGURATION OF A BROABAND CABLE NETWORK-BASED TELEPHONY ACCESS NETWORK AND A RESPECTIVE PACKET-BASED EXCHANGE
CONFIGURATION D'UN RESEAU D'ACCES TELEPHONIQUE RELIE A UN RESEAU A LARGE BANDE ET D'UN COMMUTATEUR DE PAQUETS ASSOCIE

(30) Priorität: 03.07.2002 DE 10229900
(43) Veröffentlichungstag der Anmeldung: 27.04.2005
(73) Patentinhaber: Nokia Siemens Networks GmbH & Co. KG, 81541 München (DE)
(72) Erfinder: LÖBIG, Norbert, 64291 Darmstadt (DE); PREISER, Ulrich, 81543 München (DE)
(86) Internationale Anmeldenummer: PCT/DE2003/001938
(87) Internationale Veröffentlichungsnummer: WO 2004/006507

(56) Entgegenhaltungen:
- WO-A-01/19080
- US-A- 6 023 464
- US-A1- 2001 055 305

## Beschreibung

Mit dem technischen Fortschritt und Erfolg des Internets während der letzten Jahre haben Kabelmodemtechniken, mit denen lokale Kabelfernsehnetze zur Übertragung breitbandiger multimedialer Daten genutzt werden können, als preisgünstige Alternative zu breitbandigen interaktiven Videodiensten (z.B. "Video-on-Demand", VoD) immer mehr an Bedeutung gewonnen. Dabei werden die über das Kabelfernsehnetz zu übertragenden digitalen Multimediadaten innerhalb der 8 MHz moduliert, die auf dem Kabel üblicherweise einem analogen Fernsehkanal als Frequenzbandbreite zur Verfügung gestellt werden. Die Hauptanwendungsgebiete dieser Techniken liegen dabei vor allem in einem breitbandigen Zugang zum Internet oder zu entfernten Server-Farmen. Im Zuge dieser Konvergenz von zeitmultiplexbasierten und paketbasierten Netzen, insbesondere bei Internet Protokoll (IP)-basierten Netzen, sind jedoch sowohl teilnehmernahe als auch vermittlungsknotenseitige Anpassungen erforderlich.

Im Falle des Telefoniezugangs über ein Breitbandkabelverteilnetz sind mehrere Netzkomponenten relevant. Ein Networkmanagementsystem (NMS) und/oder ein übergeordnetes Planungs- und Konfigurationstool des Netzbetreibers bedient die paketbasierten Vermittlungsstellen sowie die Kabelzugangsnetze. Die paketbasierte Vermittlungsstelle (VSt) stellt die aus der klassischen Vermittlungstechnik bekannten Netz- und Teilnehmerleistungsmerkmale bereit, verarbeitet die Signalisierungsinformationen und übernimmt die Steuerung des Nutzdatentransfers zwischen den Teilnehmern mit geeigneten paketbasierten Protokollen.

Das Kabelzugangsnetz besteht jeweils aus einer Kopfstelle (engl.: "Headend") und einer Mehrzahl von Kabelmodems, die über Multimedia Terminal Adapter (MTAs) den Anschluss von einem oder mehreren klassischen Telephonie-Teilnehmern ermöglichen. In Abhängigkeit von der verwendeten Technik und der Netzlast stellen Kabelmodems den Teilnehmern zwischen 10 und 47 MBit/s im Downstream sowie zwischen 320 kBit/s und 10 MBit/s im Upstream zur Verfügung. Diese Zahlen sind jedoch, wie bei jedem Local Area Network (LAN), das mit einem Shared Medium zusammenarbeitet, von der Anzahl aktiver Stationen abhängig, die sich diese Bandbreite teilen. Unter einem Kabelmodem versteht man ein zusätzliches externes Gerät, das beim Teilnehmer positioniert ist und auf der einen Seite einen Anschluss an ein Breitbandkabelverteilnetz (z.B. das Kabelfernsehnetz) und auf der anderen Seite einen LAN-Anschluss, z.B. Ethernet zur Verfügung stellt.

Die Netzkomponenten kommunizieren über das Paketnetz untereinander, wobei Konfigurationsinformationen, Signalisierung und Nutzdaten ausgetauscht werden.

Die Telefoniesignalisierung wird zwischen den Multimedia Terminal Adaptern (MTAs) und der Vermittlungsstelle (VSt) ausgetauscht, die Managementinformationen zwischen dem Networkmanagementsystem (NMS) und dem Breitbandkabelverteilnetz bzw. der Vermittlungsstelle.

Der Nutzdatenstrom eines Teilnehmers wird dabei aus Gründen der Sprachqualität vorzugsweise nicht über die Vermittlungsstelle geführt.

Zum vermittlungstechnischen Betrieb muss die Adressierbarkeit des Teilnehmers am MTA durch die Vermittlungsstelle sowie die Adressierbarkeit der Vermittlungsstelle durch den MTA gegeben sein. Diese Adressierbeziehungen sind beim Einbringen eines neuen MTAs oder eines neuen Teilnehmers am MTA im Breitbandkabelverteilnetz sowie in der Vermittlungsstelle in konsistenter Weise zu garantieren. Dies gilt natürlich auch bei Reparatur oder Austausch eines MTA bzw. bei Beendigung von Ausfallsituationen. Der MTA ist eine beim Teilnehmer vorhandene Einrichtung, die der Teilnehmer entweder kauft oder von seinem Kabelnetzbetreiber zur Verfügung gestellt bekommt und die sich im Breitbandkabelverteilnetz mit seiner eindeutigen, fest eingestellten Adresse, der Media Access Control (MAC)-Adresse, identifiziert. Die zugehörige Paketadresse, z.B. eine Internet Protokoll (IP)-Adresse, wird temporär zugeordnet und bleibt im Allgemeinen so lange unverändert, wie der MTA am Breitbandkabelverteilnetz eingeschaltet ist. Die Adresse der Vermittlungsstelle ist in der Regel fest eingestellt.

Aus Sicht der Vermittlungsstelle muss jedoch nicht der MTA, sondern vielmehr das einzelne Port am MTA entsprechend dem Teilnehmerendgerät adressiert werden können.

Eine mit dem Ersatz eines MTAs einhergehende Reparatur führt zwangsläufig zu einer anderen MAC-Adresse. Diese Reparatur sollte jedoch ohne Bedieneingriffe an der Vermittlungsstelle möglich sein.

Damit stellt sich das Problem, wie eine konsistente Zuordnung der Adressierung von vermittlungstechnisch genutzten Ports am MTA und der Adressierung dieser Ports in der Vermittlungsstelle geschaffen werden kann, so dass das Kabelzugangsnetz und die Vermittlungsstelle nicht über getrennte Bedienvorgänge aktualisiert werden müssen. Dies gilt auch für den Fall des Einrichtens eines neuen MTAs, eines weiteren Teilnehmers oder sonstiger Änderungen von Teilnehmerdaten.

In der Druckschrift WO 01/19080 A2 werden ein System, ein Verfahren und ein Computer-Programm offenbart, mit deren Hilfe ein Kabelmodem für einen bestimmten Dienst freigeschaltet werden kann, bzw. mit deren Hilfe die Definition eines bereits existierenden Dienstes in einem Kabelmodem automatisch aktualisiert werden kann. In dieser Patentschrift wird jedoch kein Verfahren zur Verwaltung eines breitbandigen Übertragungsnetzes aufgezeigt.

Weiterhin beschreibt die Druckschrift US 2001/0055305 A1 ein System und ein Verfahren zur Verwaltung von breitbandigen Multimedia-Übertragungssystemen, bei denen eine Netzwerksteuerung einem Router Anweisungen zum Übertragen von Daten mitteilt. Eine Administration von teilnehmerspezifischen Daten und vermittlungstechnischen Leistungsmerkmalen wird hierin jedoch nicht offenbart.

Demgegenüber liegt der Erfindung die Aufgabe zugrunde, im Umfeld einer Mehrzahl von paketbasierten Vermittlungsstellen und einer weiteren Mehrzahl von Kabelnetzen mit Kabelnetztelefonieteilnehmern und einem übergeordneten Netzmanagementsystem einem neuen Kabelnetztelefonieteilnehmer eine Portadresse oder Anschlusslage zuzuordnen. Im Kabelzugangsnetz ist eine konsistente Adressierungszuordnung zu schaffen, so dass Neueinrichtung oder Entfernung eines Teilnehmers sowie sonstige Änderungen der Teilnehmerdaten komfortabel durchführbar sind.

Diese Aufgabe wird durch das im Patentanspruch 1 angegebene Verfahren gelöst. Vorteilhafte Ausgestaltungen der Erfindung sind in den Unteransprüchen gegeben.

Im oben genannten Umfeld von paketbasierten Vermittlungsstellen, Kabelnetzen mit Kabelnetztelefonieteilnehmern und einem Network Management System (NMS) gibt es erfindungsgemäß eine Funktion, die einem neuen Kabelnetztelefonieteilnehmer automatisch eine Zuordnung zu einer Portadresse oder Anschlusslage des Vermittlungssystems herstellt. Der Kabelnetztelefonieteilnehmer ist durch seine Hardwareeigenschaft, seine topologischen Eigenschaften und durch seine vermittlungstechnischen Leistungsmerkmale charakterisiert. Diese Funktion entnimmt beim Einrichten eines Teilnehmers einem pro Vermittlungsstelle definierten Portadressvorrat ein freies Element und gibt beim Löschen des Teilnehmers das entsprechende Portadresselement wieder in den Portadressvorrat zurück. Der Portadressvorrat wird statisch mit gewissen Eigenschaften definiert, wobei die Größe des Portadressvorrats in Korrelation mit der Ausstattung der Vermittlungsstelle sowie den vermittlungstechnischen Ressourcen der Vermittlungsstelle steht.

Wird beispielsweise ein neuer Teilnehmer an einem neuen MTA eingerichtet, so erfolgt eine einmalige Eingabe der MAC-Adresse, des Hardwaretyps des MTA, der Portlage am MTA, der Teilnehmertopologie des vermittlungstechnischen Teilnehmertyps sowie der vermittlungstechnischen Leistungsmerkmale in das NMS.

Das NMS bestimmt nun aus den Teilnehmerdaten das Telefonieprofil und lädt die zugehörige Profilnummer oder auch das gesamte Profil sowie die MAC-Adresse in das Kabelnetz. Gleichzeitig ordnet das Network Management System der Vermittlungsstelle die zugehörige Paketadresse des MTA-Ports zu. Diese Paketadresse kann beispielsweise eine physikalische Adresse (z.B. eine IP-Adresse) des MTAs zuzüglich eines Portindex sein oder eine symbolische Adresse von MTA und Port, wobei der Portname gemäß einer netzeinheitlichen Namenskonvention definiert sein kann. Die ermittelte Paketadresse wird daraufhin in die Vermittlungsstelle geladen.

Falls alle Ports eines MTAs nur mit einer einzigen (physikalischen oder symbolischen) Paketadresse für vermittlungstechnische Anwendungen ansprechbar ist, ist erfindungsgemäß vorgesehen, dass der besagte Port zusätzlich zu dieser Adresse für das Vermittlungssystem über einen Index zugreifbar ist.

Werden Universal Resource Locator (URL)-konforme symbolische Adressen verwendet, so werden diese mittels Zugriff auf einen Domain Name System (DNS)-Server im Rahmen des Hochlaufs der Vermittlungsstelle bzw. im Rahmen der Administrierung in physikalische Adressen aufgelöst. Die Auflösung wird gegebenenfalls gemäß vorgegebener Gültigkeit zeitlich zyklisch oder im Fehlerfalle wiederholt. Zur Reduktion des Ladeaufwands können vorkonfigurierte Zuordnungstabellen im NMS und in der Vermittlungsstelle vorhanden sein. Im allgemeinen hat man jedoch den Fall von dynamischen Adresskonvertierungstabellen, die sich im Rahmen der Teilnehmeradministration ändern.

Die Adressumsetzung erfolgt vorzugsweise in peripheren Anteilen der Vermittlungsstelle. Dies hat den Vorteil, dass die vermittlungstechnischen Funktionen auf Basis der neutralen Portadressierung der Vermittlungsstelle abgearbeitet werden.

Erst beim Austritt von Nachrichten an den MTA wird auf die tatsächliche Paketadresse umgesetzt bzw. sofort nach Eintreffen einer Nachricht vom MTA wird auf die interne Adressierung der Vermittlungsstelle umgesetzt.

Bei Ersatz eines defekten MTAs ändert sich auch die MAC-Adresse des MTAs. Diese muss dem NMS unter Bezugnahme auf die dem Breitbandkabelverteilnetz bereits bekannte physikalische oder symbolische Paketadresse eingegeben werden. Entspricht das Breitbandkabelverteilnetz der Packet Cable Spezifikation, einer Kabelfernsehspezifikation, die neben IP-Standards auch Erweiterungen für eine breitbandige, transparente Übertragung von Sprachdaten und anderen zeitkritischen Diensten zwischen angeschlossenen Stationen und dem Headend des Kabelzugangsnetzes beinhaltet, wird beispielsweise die geänderte MAC-Adresse in den zugehörigen DHCP-Server (engl.: "Dynamic Host Configuration Protocol") eingetragen und im Rahmen des Hochlaufs zur Zuweisung der MTA-Paketadressen benutzt. Die Abrüstung eines MTAs oder Teilnehmers am MTA geht mit der automatischen Freigabe der zugehörigen Portadresse einher.

Als Schnittstellen zwischen NMS und Breitbandkabelverteilnetz sowie zwischen NMS und VSt kommen protokollgesicherte Kommunikationsschnittstellen oder auch Datenschnittstellen zum Einsatz.

Die Vorteile des beschriebenen Verfahrens sind die Befreiung des Netzbetreibers von der Zuordnung einer vermittlungsstellenspezifischen Zusatzadressierung von Kabelnetztelefonieteilnehmern am Breitbandkabelverteilnetz sowie die optionale Unterstützung symbolischer Adressierung, z.B. durch die Möglichkeit einer Neuauflösung symbolischer Adressen im Falle eines Hochlaufs bzw. Wiederanlaufs der Vermittlungsstelle, bei erschöpfter Gültigkeitsdauer oder in Fehlerfällen. Insbesondere wird der Netzbetreiber von der koordinierten Eingabe der telefonierelevanten Daten in das Breitbandkabelverteilnetz bzw. in die zugehörige Vermittlungsstelle befreit. Ferner bleibt zu erwähnen, dass auch die Möglichkeit eines alternativen Zugriffs eines Kabelnetzteilnehmers auf mehr als ein Vermittlungssystem besteht.

Mit diesem Verfahren ist nun die zentralisierte Bedienung von Kabelnetzen und Vermittlungsstellen mit automatischer Verwaltung der Kabelnetztelefonie-Teilnehmeradressen am Breitbandkabelverteilnetz möglich.

Weitere Vorteile, Merkmale und Eigenschaften der vorliegenden Erfindung werden nun anhand einiger bevorzugter Ausführungsbeispiele unter Bezugnahme auf die beigefügten Zeichnungen erläutert.

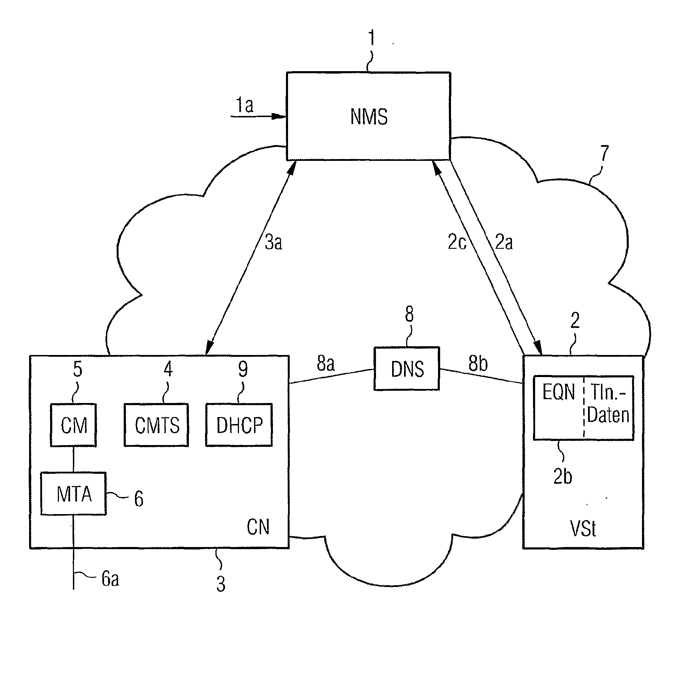

Die einzige Figur (Fig. 1) zeigt das Netzkonzept zum Anschluss klassischer Teilnehmer über ein Kabelnetz. Das erfindungsgemäße Verfahren ist hier beispielhaft an der symbolischen Adresszuordnung im Netzmanagementsystem sowie der EQN-Zuordnung in der Vermittlungsstelle dargestellt.

Bei dem im Folgenden dargestellten Beispiel handelt es sich um ein sogenanntes "Voice over Cable"-Projekt in einem Breitbandkabelverteilnetz 3, das im Umfeld eines Paketnetzes 7 Verwendung findet. Das Network Managment-System 1 bezieht dabei die ursprünglichen Eingangsinformationen 1a des Teilnehmers mit MAC-Adresse, Terminaladaptertyp, Telefoniehardwaretyp, die vermittlungstechnischen Leistungsmerkmale sowie die Zuordnung zu einem Kabelzugangsnetz 3 und die Zuordnung zu einer paketbasierten Vermittlungsstelle 2 aufgrund von topologischen bzw. netzbetreiberrelevanten Gegebenheiten.

Die Zuordnung der symbolischen Portadresse 6a am MTA 6 erfolgt durch das Network Management System 1 ggf. inklusive der Berücksichtigung des Inputs 1a von vorgelagerten Konfigurationstools des Netzbetreibers.

Die vermittlungstechnischen Daten, insbesondere der Typ des Teilnehmers (PSTN oder ISDN), Leistungsmerkmale und Rufnummernsatz, werden vom Networkmanagementsystem 1 in das Vermittlungssystem, bzw. in die Vermittlungsstelle 2 unter Angabe der symbolischen Adresse des Ports geladen (2a). Beispielsweise erfolgt dies im Falle der Einführung neuer Kabelnetztelefonieteilnehmer, aber auch bei administrativen Änderungen der Teilnehmerdaten.

Zum Zeitpunkt des Ladens 2a der Teilnehmerdaten in die Vermittlungsstelle 2 ist noch kein Bezug zu einer Gerätenummer (Equipmentnummer, EQN) im Vermittlungssystem hergestellt. Diese Zuordnung (2b) geschieht erfindungsgemäß durch die Vermittlungsstelle 2 selbst zum Zeitpunkt des Einrichtens des Kabelnetzteilnehmers durch das Networkmanagementsystem 1. Die Vermittlungsstelle 2 nutzt hierfür eine EQN-Verwaltung auf einem für Kabelnetzteilnehmer erfindungsgemäß bereitgehaltenen Equipmentnummernvorrat. Die EQN wird gegebenenfalls nach Bestimmung durch das Vermittlungssystem an das Networkmanagementsystem 1 ausgegeben (2c).

Die MAC-Adresse des MTAs 6 wird unter Bezugnahme auf die symbolische Adresse (z.B. MTA3005.CMTSKiel5@Netzbetreiber.de) des MTAs sowie unter Bezugnahme auf das durch das MTA zu verwendende Telefonieprofil vom Networkmanagementsystem 1 in das Breitbandkabelverteilnetz 3 geladen (3a). Hierbei enthält das Telefonieprofil die ggf. mehreren Paketadressen einer oder mehrerer zugehöriger paketbasierter Vermittlungsstellen wie auch die für das Betreiben der Telefonieports 6a notwendigen Parameter, beispielsweise die Definition der vermittlungstechnischen Töne.

Die Auflösung der symbolischen Adressen der Vermittlungsstellen, der MTAs sowie ggf. der MTA-Ports in Paketadressen erfolgt über mindestens einen sowohl dem Breitbandkabelverteilnetz 3 wie auch der Vermittlungsstelle 2 zugreifbaren Domain Name Server 8 (DNS), in welchem die vorrätigen Paketadressen und symbolischen Namensvorräte des Netzes hinterlegt sind (8a, 8b).

Die Vermittlungsstelle 2 löst vor Inbetriebnahme eines neuen Ports an einem MTA den symbolischen MTA-Namen oder ggf. den symbolischen Portnamen durch Zugriff (8b) auf den DNS 8 auf. Die erhaltene Paketadresse bleibt eine vordefinierte Zeit gültig. Bei Ablauf der Gültigkeit erfolgt ein erneuter Zugriff (8b) der Vermittlungsstelle 2 auf den DNS-Server 8. Der symbolische MTA-Name oder ggf. der symbolische Portname ist Teil der Teilnehmerdaten. Die über den DNS-Server 8 zugeordnete Paketadresse ist temporär gültiger Teil der Teilnehmerdaten des Vermittlungssystems. Besitzt das MTA mehr als ein vermittlungstechnisches Port 6a aber nur eine einheitliche Paketadresse, was der Normalfall ist, so kann der Portindex aus dem symbolischen Namen des Ports in der Vermittlungsstelle entsprechend der Namenskonvention zur Nummerierung der Ports am MTA 6a abgeleitet werden.

Das Breitbandkabelverteilnetz 3 löst im Rahmen der Inbetriebnahme des MTA 6 den symbolischen MTA-Namen ebenfalls durch Zugriff 8a auf den DNS-Server 8 auf. Die erhaltene symbolische Adresse des MTA wird in einen DHCP-Server 9 (engl.: "Dynamic Host Configuration Protocol") des Kabelnetzsystems eingetragen und mittels DNS-Zugriff in die tatsächliche Paketadresse aufgelöst. Diese steht sodann für die Inbetriebnahme des MTA 6 zur Verfügung. Sie hat jedoch ebenfalls nur temporäre Gültigkeit und wird nach Ablauf der Gültigkeit durch erneuten Zugriff des DHCP-Servers 9 auf den DNS-Server 8 aktualisiert.

Die Zuordnung von MAC-Adresse zu aktueller Paketadresse steht also im DHCP-Server 9 des Kabelnetzes 3 zur Verfügung. Dieser wird bei Hochlauf des MTA 6 abgefragt und macht dem MTA 6 genau die durch Networkmanagementsystem 1 und Domain Name System vorbestimmte Paketnetzadresse verfügbar.

Partneradressen mindestens einer Vermittlungsstelle 2 finden sich im Telefonieprofil, das während des Hochlaufs des MTA 6, also nach Installation bzw. Anschalten von Spannung, von einem Server des Kabelnetzes abgerufen wird. Diese können ebenfalls symbolisch definiert und über DNS auflösbar oder aber feste physikalische Paketnetzadressen sein.

Ausfall und Wiederverfügbarkeit des MTA 6 können ohne Eingriffe am Networkmanagementsystem 1 erfolgen. Das Auswechseln eines MTAs 6 eines Teilnehmers bedingt die Aktualisierung der MAC-Adresse über das Networkmanagementsystem 1 und führt zur Aktualisierung des DHCP-Servers 9. Nach dem Anlauf des MTA können Telefoniedienste ohne weitere Bedieneingriffe an der Vermittlungsstelle bereitgestellt werden.

Die Zuordnung von vermittlungsstellengerechter Portadressierung gemäß Equipmentnummer (EQN) und Adressierung mittels Paketadresse und Portindex oder ggf. pro Port verfügbarer eigener Paketadresse kann aus Einfachheitsgründen auch vorkonfiguriert sein. Mit der Inbetriebnahme peripherer Anteile des Vermittlungssystems besteht dann bereits eine Zuordnung zwischen der paketnetzbezogenen Portadresse und der bereitgehaltenen Equipmentnummer in Vermittlungsstelle 2 und Networkmanagementsystem 1. Damit kann auf das Laden der Zuordnung durch das Networkmanagementsystem 1 im Rahmen der Teilnehmerverwaltung aufgrund von Einzelaufträgen sowie gegebenenfalls auf die Massenaktualisierung der Zuordnungsbeziehungen bei initialem Systemanlauf (z. B. im Rahmen der Wiederinbetriebnahme nach Ausfall) verzichtet werden.

## Patentansprüche

1. Verfahren zur Verwaltung teilnehmerspezifischer Daten einer Mehrzahl von Kabelnetztelefonieteilnehmern vom Typ PSTN oder ISDN, die über eine Mehrzahl von Kabelmodems (5) an ein als Telefoniezugangsnetz verwendetes Breitbandkabelverteilnetz (3) in Verbindung mit mindestens einer paketbasierten Vermittlungsstelle (2) zur Bereitstellung von Netz- und Teilnehmerleistungsmerkmalen, Verarbeitung von Signalisierungsinformationen und Steuerung des Nutzdatentransfers mit Hilfe paketbasierter Protokolle angeschlossen sind, wobei
einem Kabelnetztelefonieteilnehmer automatisch eine Anschlusslage der paketbasierten Vermittlungsstelle (2) zugeordnet wird, wobei einem Anschlusslagenvorrat beim Einrichten eines Teilnehmers ein freies Anschlusslagenelement temporär entnommen und beim Löschen des Teilnehmers wieder zurückgegeben wird, und
eine Zuordnung einer Portadresse (6a) des Kabelnetztelefonieteilnehmers an einem Multimedia Terminal Adapter (6) zu einer Anschlusslage der Vermittlungsstelle (2) durch die Vermittlungsstelle (2) selbst, durch ein übergeordnetes Netzmanagementsystem (1) erfolgt oder im Rahmen einer Vorkonfiguration über mindestens ein dem Netzmanagementsystem (1) vorgelagertes Planungs- und Konfigurationstool des Netzbetreibers festgelegt ist.

2. Verfahren nach Anspruch 1, **gekennzeichnet durch** den Schritt der Eingabe (1a) einer den Multimedia-Terminal Adapter (6) identifizierenden unveränderlichen Adresse sowie weiterer Daten in ein Netzmanagementsystem (1).

3. Verfahren nach Anspruch 2, **dadurch gekennzeichnet, dass** die weiteren Daten die den Telefonieteilnehmer beschreibende Daten sind, unter anderem insbesondere der Ort des Anschlusses und die bereitzustellenden vermittlungstechnischen Leistungsmerkmale.

4. Verfahren nach Anspruch 2 oder 3, **dadurch gekennzeichnet, dass** das Netzmanagementsystem (1) ein zuständiges Kabelmodemterminalsystem (4) und eine zuständige paketbasierte Vermittlungsstelle (2) bestimmt.

5. Verfahren nach Anspruch 2, 3 oder 4, **dadurch gekennzeichnet,**
**dass** das Netzmanagementsystem (1) ein Telefonie-Profil zuordnet und aus dem Port (6a) am Multimedia Terminal Adapter (6) und der unveränderlichen Adresse des Multimedia-Terminal Adapters (6) eine teilnehmerspezifische Portadressinformation erstellt, die der Vermittlungsstelle (2) zugeordnet wird.

6. Verfahren nach Anspruch 5, **dadurch gekennzeichnet,**
**dass** jedem Port (6a) eines jeden Multimedia Terminal Adapters (6) als teilnehmerspezifische Portadressinformation eine eigene physikalische Paketadresse zugewiesen ist.

7. Verfahren nach Anspruch 5, **dadurch gekennzeichnet,**
**dass** jedem Port (6a) eines Multimedia Terminal Adapters (6) als teilnehmerspezifische Portadressinformation eine dem Multimedia Terminal Adapter (6) zugeordnete physikalische Paketadresse ergänzt um einen zur teilnehmerspezifischen Signalisierung verwendeten Portindex zugewiesen ist.

8. Verfahren nach Anspruch 5, **dadurch gekennzeichnet,**
**dass** jedem Port (6a) eines jeden Multimedia Terminal Adapters (6) als teilnehmerspezifische Portadressinformation eine eigene symbolische Adresse im Paketnetz zugewiesen ist.

9. Verfahren nach Anspruch 8, **dadurch gekennzeichnet,**
**dass** die symbolische Adresse gemäß einheitlicher Namenskonvention gewählt ist und den Schluss auf den symbolischen Namen des Multimedia Terminal Adapters (6) sowie den Portindex erlaubt.

10. Verfahren nach einem der vorhergehenden Ansprüche,
**dadurch gekennzeichnet,**
**dass** das Netzmanagementsystem (1) vermittlungstechnisch relevante Teilnehmerdaten unter Bezugnahme auf Anschlusslage und inklusive teilnehmerspezifischer Portadressinformation in die paketbasierte Vermittlungsstelle (2) lädt.

11. Verfahren nach einem der vorhergehenden Ansprüche,
**dadurch gekennzeichnet,**
**dass** das Netzmanagementsystem (1) vermittlungstechnisch relevante Teilnehmerdaten ohne Bezugnahme auf Anschlusslage, jedoch inklusive teilnehmerspezifischer Portadressinformation in die paketbasierte Vermittlungsstelle (2) lädt und diese die Anschlusslage zuordnet.

12. Verfahren nach einem der vorhergehenden Ansprüche,
**dadurch gekennzeichnet,**
**dass** das Netzmanagementsystem (1) vermittlungstechnisch relevante Teilnehmerdaten entweder unter Bezugnahme auf Anschlusslage oder teilnehmerspezifische Portadressinformation in die paketbasierte Vermittlungsstelle (2) lädt und dort eine vorkonfigurierte Tabelle zur Konvertierung von Anschlusslage und Portadressinformation hinterlegt ist.

13. Verfahren nach einem der vorhergehenden Ansprüche,
**dadurch gekennzeichnet, dass** das Netzmanagementsystem (1) teilnehmerrelevante Information dem Breitbandkabelverteilnetz (3) verfügbar macht.

14. Verfahren nach Anspruch 13, **dadurch gekennzeichnet,**
**dass** die teilnehmerrelevanten Informationen das Telefonieprofil des Teilnehmers, die Anschlusslage des Teilnehmers am Multimedia Terminal Adapter (6), die den Multimedia Terminal Adapter (6) identifizierende unveränderliche Adresse und die physikalischen oder symbolischen Paketadressen des Teilnehmers und der paketbasierten Vermittlungsstellen umfassen.

15. Verfahren nach einem der vorhergehenden Ansprüche,
**dadurch gekennzeichnet,**
**dass** die symbolischen Adressen mittels Zugriff auf einen DNS-Server (8) in physikalische Adressen im Rahmen des Hochlaufs der Vermittlungsstelle oder der Inbetriebnahme der Multimedia Terminal Adapter (6) oder im Rahmen der Administrierung aufgelöst werden bzw. bei vorgegebener Gültigkeitsdauer dieses Vorgehen zeitlich zyklisch wiederholt wird.

16. Verfahren nach einem der vorhergehenden Ansprüche,
**dadurch gekennzeichnet,**
**dass** die Adressumsetzung der Signalisierungsdatenpakete innerhalb der Vermittlungsstelle (2) in den den Teilnehmern zugewandten peripheren Anteilen der Vermittlungsstelle (2) geschieht.

17. Verfahren nach einem der vorhergehenden Ansprüche,
**dadurch gekennzeichnet,**
**dass** bei Ersatz des Multimedia Terminal Adapters (6) nur die neue Terminaladapteradresse dem Netzmanagementsystem (1) unter Bezugnahme auf die bisher zugehörige Paketadresse bekanntgegeben werden muss.

18. Verfahren nach einem der vorhergehenden Ansprüche,
**dadurch gekennzeichnet,**
**dass** als Paketadressen des Multimedia Terminal Adapters (6) und/oder seiner Ports (6a) und der paketbasierten Vermittlungsstelle (2) Internet-Protokoll Adressen verwendet werden.

19. Verfahren nach einem der vorhergehenden Ansprüche,
**dadurch gekennzeichnet,**
**dass** als Schnittstelle zwischen Netzmanagementsystem (1) und Breitbandkabelverteilnetz (3) und Netzmanagementsystem (1) und Vermittlungsstelle (2) protokollgesicherte Kommunikationsschnittstellen oder Datenschnittstellen zum Einsatz kommen.

20. Verfahren nach einem der vorhergehenden Ansprüche,
**gekennzeichnet durch**
die Möglichkeit einer Neuauflösung symbolischer Adressen im Falle eines Hochlaufs bzw. Wiederanlaufs der Vermittlungsstelle (2), bei erschöpfter Gültigkeitsdauer der Adressen bzw. in Fehlerfällen.

21. Verfahren nach einem der vorhergehenden Ansprüche,
**gekennzeichnet durch**
die Möglichkeit des alternativen Zugriffs eines Kabelnetztelefonieteilnehmers auf mehr als ein Vermittlungssystem (2).

22. Computerprogramm,
**dadurch gekennzeichnet,**
**dass** es ein Verfahren nach einem der vorhergehenden Ansprüche implementiert, wenn es auf einer Recheneinrichtung läuft.

## Claims

1. Method for managing subscriber-specific data for a plurality of cable network telephone subscribers of PSTN or ISDN type which are connected by means of a plurality of cable modems (5) to a broadband cable distribution network (3), used as a telephone access network, in conjunction with at least one packet-based exchange (2) for providing network and subscriber service features, processing signal information and controlling the user data transfer using packet-based protocols, wherein a cable network telephone subscriber is automatically assigned a line location of the packet-based exchange (2), wherein a free line location element is temporarily taken from a pool of line locations when a subscriber is connected and is returned when the subscriber is cleared, and
a port address (6a) for the cable network telephone subscriber on a multimedia terminal adapter (6) is assigned to a line location of the exchange (2) by the exchange (2) itself, by a superordinate network management system (1), or is stipulated in the course of a preconfiguration by means of at least one planning and configuration tool of the network operator, said planning and configuration tool being upstream of the network management system (1).

2. Method according to Claim 1, **characterized by** the step of input (1a) of an invariable address identifying the multimedia terminal adapter (6) and of further data into a network management system (1).

3. Method according to Claim 2, **characterized in that** the further data are the data describing the telephone subscriber, inter alia particularly the location of the access and the call-processing service features to be provided.

4. Method according to Claim 2 or 3, **characterized in that** the network management system (1) determines a responsible cable modem terminal system (4) and a responsible packet-based exchange (2).

5. Method according to Claim 2, 3 or 4, **characterized in that** the network management system (1) assigns a telephony profile and creates from the port (6a) on the multimedia terminal adapter (6) and the invariable address of the multimedia terminal adapter (6) a subscriber-specific port address information item which is assigned to the exchange (2).

6. Method according to Claim 5, **characterized in that** each port (6a) of each multimedia terminal adapter (6) has an associated dedicated physical packet address as subscriber-specific port address information.

7. Method according to Claim 5, **characterized in that** each port (6a) of a multimedia terminal adapter (6) has, as subscriber-specific port address information, an associated physical packet address which is associated with the multimedia terminal adapter (6) and which is complemented by a port index used for subscriber-specific signalling.

8. Method according to Claim 5, **characterized in that** each port (6a) of each multimedia terminal adapter (6) has a dedicated symbolic address in the packet network as subscriber-specific port address information.

9. Method according to Claim 8, **characterized in that** the symbolic address is chosen according to a standard name convention and allows inference of the symbolic name of the multimedia terminal adapter (6) and the port index.

10. Method according to one of the preceding claims,
**characterized in that** the network management system (1) loads subscriber data which are relevant to call processing into the packet-based exchange (2) by referring to line location and including subscriber-specific port address information.

11. Method according to one of the preceding claims,
**characterized in that** the network management system (1) loads subscriber data which are relevant to call processing into the packet-based exchange (2) without referring to line location, but including subscriber-specific port address information, and said exchange assigns the line location.

12. Method according to one of the preceding claims,
**characterized in that** the network management system (1) loads subscriber data which are relevant to call processing into the packet-based exchange (2) either by referring to line location or by referring to subscriber-specific port address information, and said exchange has a preconfigured table stored for converting line location and port address information.

13. Method according to one of the preceding claims,
**characterized in that** the network management system (1) makes subscriber-relevant information available to the broadband cable distribution network (3).

14. Method according to Claim 13, **characterized in that** the subscriber-relevant information comprises the telephony profile of the subscriber, the line location of the subscriber on the multimedia terminal adapter (6), the invariable address identifying the multimedia terminal adapter (6) and the physical or symbolic packet addresses of the subscriber and of the packet-based exchanges.

15. Method according to one of the preceding claims,
**characterized in that** the symbolic addresses are resolved, by accessing a DNS server (8), into physical addresses as the exchange is started up or as the multimedia terminal adapter (6) is put into operation or in the course of the administration, and this process is repeated cyclically over time given a prescribed validity period.

16. Method according to one of the preceding claims,
**characterized in that** the address conversion for the signalling data packets within the exchange (2) takes place in the peripheral components of the exchange (2) which are juxtaposed against the subscribers.

17. Method according to one of the preceding claims,
**characterized in that**, when the multimedia terminal adapter (6) is replaced, it is only necessary to notify the network management system (1) of the new terminal adapter address by referring to the previously associated packet address.

18. Method according to one of the preceding claims,
**characterized in that** the packet addresses used for the multimedia terminal adapter (6) and/or for the ports (6a) thereof and for the packet-based exchange (2) are Internet protocol addresses.

19. Method according to one of the preceding claims,
**characterized in that** the interfaces used between network management system (1) and broadband cable distribution network (3) and network management system (1) and exchange (2) are protocol-protected communication interfaces or data interfaces.

20. Method according to one of the preceding claims,
**characterized by** the option of re-resolving symbolic addresses when the exchange (2) is started up or restarted, when the validity period of the addresses has run out or in cases of error.

21. Method according to one of the preceding claims,
**characterized by** the option of alternative access by a cable network telephone subscriber to more than one exchange (2).

22. Computer program,
**characterized in that** it implements a method according to one of the preceding claims when it is executed on a computation device.

## Revendications

1. Procédé de gestion de données, spécifiques aux usagers, d'une pluralité d'usagers de la téléphonie sur réseaux de câbles du type PSTN ou RNIS, lesquels usagers sont raccordés par l'intermédiaire d'une pluralité de modems pour câble (5) à un réseau de distribution par câble à large bande (3), utilisé en tant que réseau d'accès téléphonique, en combinaison avec au moins un centre de commutation basé sur paquets (2), pour mettre à disposition des caractéristiques de services de réseaux et d'usagers, traiter des informations de signalisation et commander le transfert de données utiles à l'aide de protocoles basés sur paquets,
une position de connexion du centre de commutation basé sur paquets (2) étant affectée automatiquement à un usager de la téléphonie sur réseaux de câbles, un élément de position de connexion libre étant prélevé temporairement sur une réserve de positions de connexion lors de la mise en place d'un usager et étant restitué à la suppression de l'usager et
une affectation d'une adresse de port (6a) de l'usager de la téléphonie sur réseaux de câbles, au niveau d'un adaptateur de terminal multimédia (6), à une position de connexion du centre de commutation (2) étant effectuée par le centre de commutation (2) lui-même, par un système de gestion de réseau (1) d'ordre supérieur ou étant déterminée dans le cadre d'une préconfiguration par l'intermédiaire d'au moins un outil de planification et de configuration de l'exploitant de réseau en amont du système de gestion de réseau (1).

2. Procédé selon la revendication 1, **caractérisé par** l'étape de la saisie (1a) d'une adresse constante qui identifie l'adaptateur de terminal multimédia (6) ainsi que d'autres données dans un système de gestion de réseau (1).

3. Procédé selon la revendication 2, **caractérisé en ce que** les autres données sont les données qui décrivent l'usager téléphonique, notamment le lieu du raccordement et les caractéristiques de services de la technique de commutation à mettre à disposition.

4. Procédé selon la revendication 2 ou 3, **caractérisé en ce que** le système de gestion de réseau (1) détermine un système de terminal à modem pour câble (4) compétent et un centre de commutation basé sur paquets (2) compétent.

5. Procédé selon la revendication 2, 3 ou 4, **caractérisé en ce que** le système de gestion de réseau (1) affecte un profil de téléphonie et crée, à partir du port (6a) au niveau de l'adaptateur de terminal multimédia (6), et de l'adresse constante de l'adaptateur de terminal multimédia (6), une information d'adresse de port spécifique à l'usager, laquelle est affectée au centre de commutation (2).

6. Procédé selon la revendication 5, **caractérisé en ce qu'**une propre adresse physique de paquet est assignée à chaque port (6a) de tout adaptateur de terminal multimédia (6) en tant qu'information d'adresse de port spécifique à l'usager.

7. Procédé selon la revendication 5, **caractérisé en ce qu'**est assignée, à chaque port (6a) d'un adaptateur de terminal multimédia (6), en tant qu'information d'adresse de port spécifique à l'usager, une adresse physique de paquet affectée à l'adaptateur de terminal multimédia (6), complétée par un indice de port utilisé pour la signalisation spécifique à l'usager.

8. Procédé selon la revendication 5, **caractérisé en ce qu'**une propre adresse symbolique, dans le réseau de paquets, est assignée à chaque port (6a) de tout adaptateur de terminal multimédia (6) en tant qu'information d'adresse de port spécifique à l'usager.

9. Procédé selon la revendication 8, **caractérisé en ce que** l'adresse symbolique est choisie selon une convention de nom unitaire et permet de conclure au nom symbolique de l'adaptateur de terminal multimédia (6) et à l'indice de port.

10. Procédé selon l'une des revendications précédentes, **caractérisé en ce que** le système de gestion de réseau (1) charge dans le centre de commutation basé sur paquets (2) des données d'usagers pertinentes au regard de la technique de commutation avec référence à la position de connexion et y compris une information d'adresse de port spécifique à l'usager.

11. Procédé selon l'une des revendications précédentes, **caractérisé en ce que** le système de gestion de réseau (1) charge des données d'usagers pertinentes au regard de la technique de commutation sans référence à la position de connexion, mais y compris une information d'adresse de port spécifique à l'usager, dans le centre de commutation basé sur paquets (2) et celui-ci affecte la position de connexion.

12. Procédé selon l'une des revendications précédentes, **caractérisé en ce que** le système de gestion de réseau (1) charge dans le centre de commutation basé sur paquets (2) des données d'usagers pertinentes au regard de la technique de commutation soit à la position de connexion soit à une information d'adresse de port spécifique à l'usager et une table préconfigurée de conversion de la position de connexion et de l'information d'adresse de port y est déposée.

13. Procédé selon l'une des revendications précédentes, **caractérisé en ce que** le système de gestion de réseau (1) met de l'information pertinente sur les usagers à la disposition du réseau de distribution par câble à large bande (3).

14. Procédé selon la revendication 13, **caractérisé en ce que** les informations pertinentes sur les usagers incluent le profil téléphonique de l'usager, la position de connexion de l'usager au niveau de l'adaptateur de terminal multimédia (6), l'adresse constante qui identifie l'adaptateur de terminal multimédia (6) et les adresses de paquets physiques ou symboliques de l'usager et des centres de commutation basés sur paquets.

15. Procédé selon l'une des revendications précédentes, **caractérisé en ce que** les adresses symboliques sont résolues en adresses physiques par accès à un serveur DNS (8) dans le cadre du lancement du centre de commutation ou de la mise en service des adaptateurs de terminal multimédia (6) ou dans le cadre de l'administration resp. cette opération, étant donné une durée de validité prédéterminée, est répétée cycliquement dans le temps.

16. Procédé selon l'une des revendications précédentes, **caractérisé en ce que** la conversion de l'adresse des paquets de données de signalisation se produit au sein du centre de commutation (2) dans les parties périphériques du centre de commutation (2) tournées vers les usagers.

17. Procédé selon l'une des revendications précédentes, **caractérisé en ce que**, en cas de remplacement de l'adaptateur de terminal multimédia (6), seule la nouvelle adresse de l'adaptateur de terminal doit être communiquée au système de gestion du réseau (1) avec référence à l'adresse de paquet jusqu'alors associée.

18. Procédé selon l'une des revendications précédentes, **caractérisé en ce que** des adresses de protocole internet sont utilisées en tant qu'adresses de paquets de l'adaptateur du terminal multimédia (6) et/ou de ses ports (6a) et du centre de commutation basé sur paquets (2).

19. Procédé selon l'une des revendications précédentes, **caractérisé en ce que** des interfaces de communication sécurisées par protocole ou des interfaces de données sont mises en oeuvre en tant qu'interface entre le système de gestion de réseau (1) et le réseau de distribution par câble à large bande (3) et le système de gestion de réseau (1) et le centre de commutation (2).

20. Procédé selon l'une des revendications précédentes, **caractérisé par** la possibilité d'une nouvelle résolution d'adresses symboliques dans le cas d'un lancement resp. relancement du centre de commutation (2), lorsque la durée de validité des adresses est épuisée resp. en cas d'erreur.

21. Procédé selon l'une des revendications précédentes, **caractérisé par** la possibilité de l'accès alternatif d'un usager de la téléphonie sur réseaux de câbles à plus d'un système de commutation (2).

22. Programme informatique, **caractérisé en ce qu'**il implémente un procédé selon l'une des revendications précédentes lorsqu'il tourne sur un équipement informatique.
